# EUROPÄISCHE PATENTSCHRIFT

(11) **EP 0 352 428 B1**
(45) Veröffentlichungstag und Bekanntmachung des Hinweises auf die Patenterteilung: **03.02.1993**
(21) Anmeldenummer: 89109350.2
(22) Anmeldetag: 24.05.1989
(51) Int. Cl.: B60J 7/12

(54) **Klappverdeck für Fahrzeug**
Collapsible hood for vehicle
Toit décapotable pour véhicule

(30) Priorität: 29.07.1988 DE 3825790
(43) Veröffentlichungstag der Anmeldung: 31.01.1990
(73) Patentinhaber: Dr.Ing.h.c. F. Porsche Aktiengesellschaft, 70435 Stuttgart (DE)
(72) Erfinder: Kolb, Eugen, D-7000 Stuttgart 30 (DE)

(56) Entgegenhaltungen:
- DE-C- 706 684
- DE-C- 3 523 433
- US-A- 4 573 732

## Beschreibung

Die Erfindung bezieht sich auf ein Klappverdeck für Fahrzeuge, insbesondere Personenkraftwagen gemäß dem Oberbegriff des Patentanspruchs 1.

Ein derartiges Klappverdeck ist aus der DE-PS 706 684 bekannt. Bei solchen Klappverdecken sind alle Drehachsen der Verdeckkinematik gleichgerichtet und verlaufen senkrecht zur vertikalen Längsmittelebene des Personenkraftwagens. Um ein derartiges Klappverdeck vollständig versenkt in einem heckseitigen Aufnahmeraum der Karosserie unterzubringen, muß der Heckbereich zumindest die gleiche Breite aufweisen wie die größte Breite des Verdecks.

Bei neuen, aerodynamisch optimierten Karosserien, die mit einem Heckeinzug versehen sind, ergeben sich somit große Probleme, das Verdeck versenkt in einem heckseitigen Aufnahmeraum unterzubringen.

Aufgabe der Erfindung ist es, an einem Klappverdeck solche Vorkehrungen zu treffen, daß einerseits bei geschlossenem Verdeck eine gute umfangsseitige Abdichtung zur angrenzenden seitlichen Sichtscheibe erzielt wird und daß sich das Klappverdeck andererseits auch bei aerodynamisch optimierten Karosserien (Heckeinzug) problemlos vollständig versenkt in einem heckseitigen Aufnahmeraum verstauen läßt.

Erfindungsgemäß wird diese Aufgabe durch die kennzeichnenden Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß mit dem im hinteren aufrechten Randbereich der Sichtscheibe vorgesehenen Säulenabschnitt, der über eine Zwangssteuerung mit dem Klappverdeck verbunden ist, einerseits eine gute Abdichtung der Sichtscheibe und andererseits eine Reduzierung der Breite des Klappverdecks beim Zurückschwenken gewährleistet ist, da das freie Ende des Säulenabschnitts zwangsweise eine Bewegung nach innen ausführt. Entscheidend für diese Bewegung nach innen ist die schrägverlaufende Drehachse zwischen dem hinteren Verdeckrahmen und dem Säulenabschnitt. Die Kugelgelenke der Verbindungsstange bewirken einen guten Bewegungsablauf ohne Verspannungen der Verdeckkinematik. Die Verbindungsstange fixiert den Säulenabschnitt bei geschlossenem Verdeck in Fahrzeuglängsrichtung. Bei dieser Konstruktion können die Sichtscheibe und das Verdeck eine große Seitenfallung (Schräglage) aufweisen und trotzdem läßt sich das Verdeck problemlos - ohne eine kostenintensive Heckänderung - im Aufnahmeraum unterbringen.

Ein Ausführungsbeispiel der Erfindung ist in der Zeichnung dargestellt und wird im folgenden näher erläutert.
Es zeigt
Fig. 1 eine Teilseitenansicht eines Personenwagens mit einem Klappverdeck in Schließstellung,
Fig. 2 eine Teilseitenansicht auf den Personenwagen mit zurückgeschwenktem Klappverdeck,
Fig. 3 eine Draufsicht auf die Fig. 2,
Fig. 4 eine Teilseitenansicht auf das Verdeckgestänge des Klappverdecks in größerem Maßstab,
Fig. 5 eine Teildraufsicht auf die Fig. 4 in größerem Maßstab,
Fig. 6 eine Ansicht in Pfeilrichtung R der Fig. 4 in größerem Maßstab,
Fig. 7 eine Einzelheit X der Fig. 4 in größerem Maßstab,
Fig. 8 eine Einzelheit Y der Fig. 5 in größerem Maßstab,
Fig. 9 einen Schnitt nach der Linie IX-IX der Fig. 7,
Fig. 10 einen Schnitt nach der Linie X-X der Fig. 7.

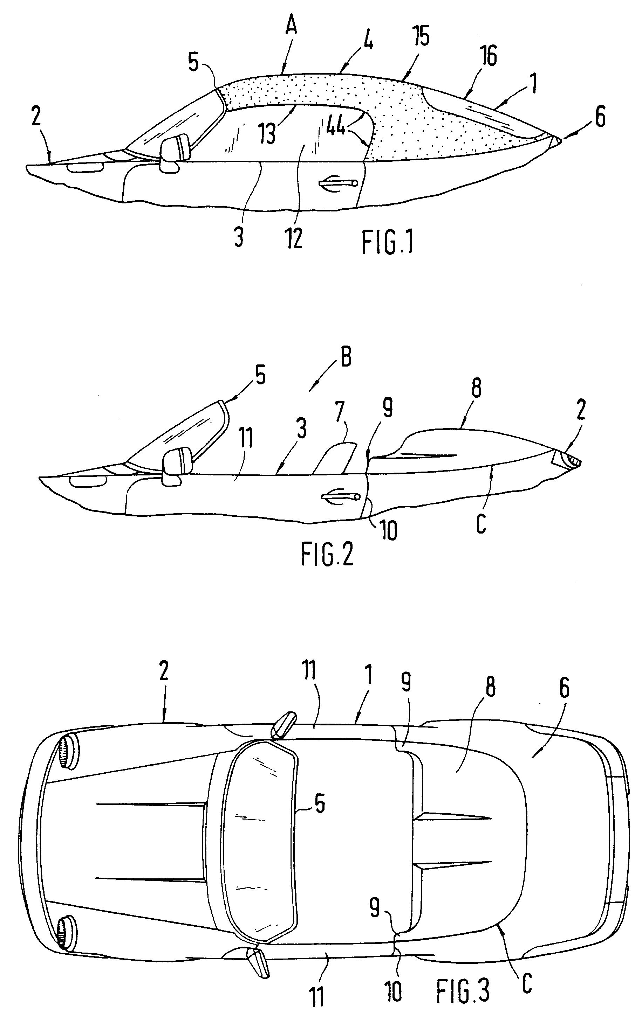

In Fig. 1 ist ein umwandelbarer zweisitziger Personenwagen 1 dargestellt, dessen Aufbau 2 oberhalb einer Gürtellinie 3 ein Klappverdeck 4 umfaßt, das sich zwischen einem Windschutzscheibenrahmen 5 und einem Heckbereich 6 erstreckt. Das Klappverdeck 4 ist in seiner Schließstellung A über nicht näher dargestellte Verschlüsse am Winschutzscheibenrahmen 5 in Lage gehalten. Nach Lösen der Verschlüsse läßt sich das Klappverdeck 4 hinter die beiden Vordersitze 7 verschwenken.

Gemäß Fig. 2 ist das zurückgeklappte Verdeck 4 (Offenstellung B) unterhalb einer aus Kunststoff gefertigten Fondabdeckung 8 angeordnet, wobei die Fondabdeckung 8 schwenkbar am Aufbau 2 angelenkt ist. Die aerodynamisch ausgebildete Fondabdeckung 8 ist in der Draufsicht gesehen, dem bogenförmigen Verlauf C der Heckkontur angepaßt. Seitlich außenliegende vordere Endbereiche 9 der Fondabdeckung 8 verlaufen etwa in Fortsetzung einer hinteren Begrenzungskante 10 einer seitlichen Tür 11.

Die Tür 11 ist mit einer höhenverstellbaren Sichtscheibe 12 versehen, wobei die Sichtscheibe 12 oberhalb der Gürtellinie 3 rahmenlos geführt ist. Ein obenliegender, etwa horizontal verlaufender Rand 13 der Sichtscheibe 12 stützt sich bei geschlossenem Klappverdeck A unter Vorspannung an einer am Klappverdeck 4 angebrachten, nicht näher dargestellten Dichtung ab.

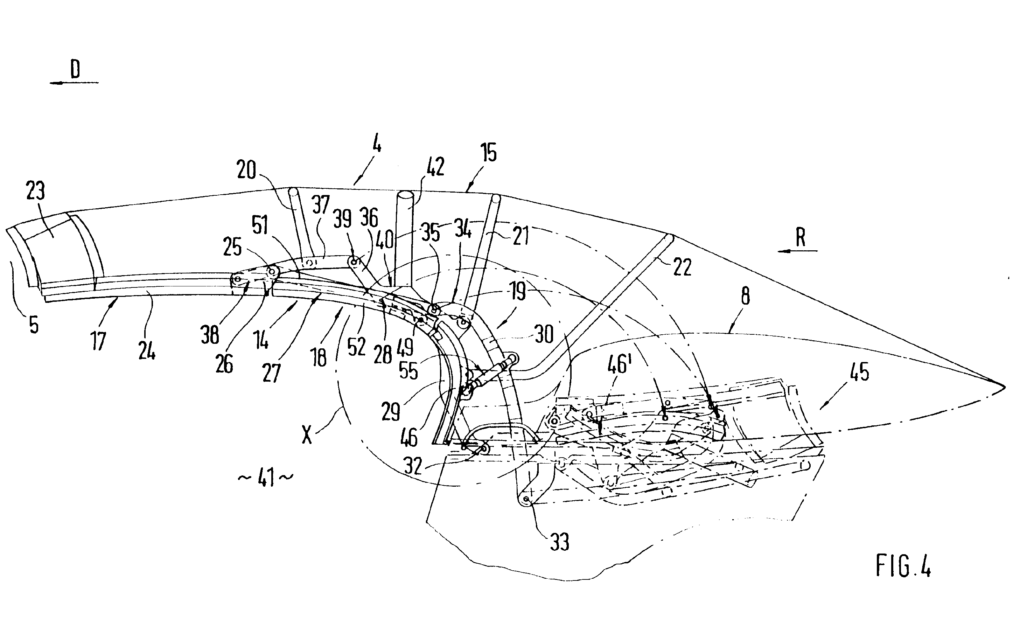

Das Klappverdeck 4 setzt sich aus einem Verdeckgestell 14 und einem Verdeckbezug 15 zusammen, wobei benachbart des Heckbereichs 6 eine flexible oder starre Heckscheibe 16 vorgesehen ist (Fig. 1 und 4). Das Verdeckgestell 14 umfaßt einen vorderen Verdeckrahmen 17, einen hinteren Verdeckrahmen 18, ein am hinteren Verdeckrahmen 18 angreifendes Parallelogramm-Gestänge 19, einen vorderen Querspriegel 20, einen hinteren Querspriegel 21 und einen Eckspriegel 22 (Fig. 4).

Der vordere Verdeckrahmen 17 besteht aus einem benachbart dem Windschutzscheibenrahmen 5 verlaufenden Querträger 23 und zwei seitlichen vorderen Längsholmen 24, wobei die beiden Längsholme 24 an ihren vorderen Endbereichen fest mit dem Querträger 23 verbunden sind. Der hintere Verdeckrahmen 18 umfaßt zwei seitlich außenliegende hintere Längsholme 27, wobei jeder Längsholm 27 aus einem innenliegenden Längslenker 51 und einem außenliegenden Halteteil 52 besteht. Am Halteteil 52 ist eine nicht näher dargestellte Dichtung befestigt, die mit der Sichtscheibe 12 dichtend zusammenwirkt. Das Halteteil 52 ist örtlich fest mit dem Längslenker 51 verbunden, beispielsweise durch Schweißen. Entsprechend Fig. 4 ist das Halteteil 52 dem gebogenen Formverlauf des obenliegenden Randes 13 der Sichtscheibe 12 angepaßt, während der Längslenker 51 geradlinig ausgebildet ist.

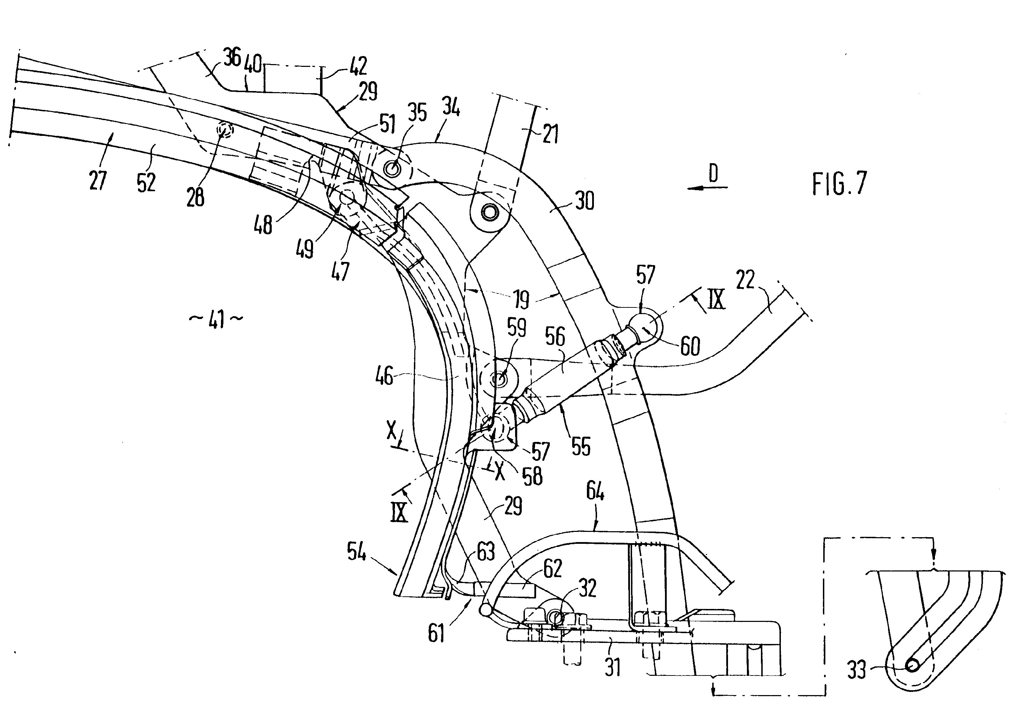

Gemäß Fig. 4 ist der vordere Verdeckrahmen 17 bei 25 gelenkig mit dem hinteren Verdeckrahmen 18 verbunden, wobei die Gelenkachse 25 horizontal ausgerichtet ist und in Fahrzeugquerrichtung verläuft. Die Gelenkachse 25 verbindet ein am Längsholm 24 vorgesehenes Lager 26 mit dem Längslenker 51. Jeder Längslenker 51 ist in einem mittleren Bereich seiner Längserstreckung mit einem Hauptspriegel 29 drehbar verbunden. Die Drehachse 28 des Hauptspriegels 29 ist horizontal ausgerichtet und verläuft in Fahrzeugquerrichtung. Der Hauptspriegel 29 und ein in Fahrtrichtung D gesehen dahinterliegender Lenkhebel 30 bilden das Parallelogramm-Gestänge 19 (Fig. 7). Der Hauptspriegel 29 und der Lenkhebel 30 sind an einer aufbauseitig befestigten Lagerplatte 31 drehbar angelenkt. Beide Drehachsen 32, 33 sind horizontal ausgerichtet und verlaufen in Fahrzeugquerrichtung. Die Drehachse 33 des Lenkhebels 30 liegt dabei tiefer als die Drehachse 32 des Hauptspriegels 29, und zwar unterhalb der Lagerplatte 31. In Fahrtrichtung D gesehen, liegt die Drehachse 32 vor der Drehachse 33.

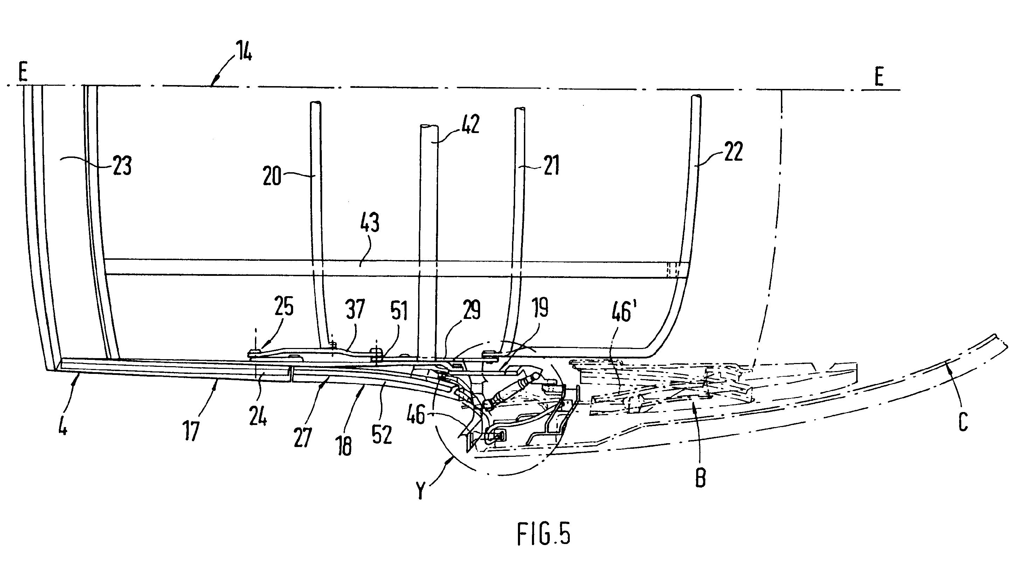

Ein oberes Ende 34 des Lenkhebels 30 ist bei 35 gelenkig mit dem hinteren Ende des Längslenkers 51 verbunden. Ein oberhalb des Drehpunktes 28 liegender Arm 36 des Hauptspriegels 29 wirkt mit einem Hebel 37 zusammen, dessen eines Ende 38 am Lager 26 des Längsholms 24 drehbar angelenkt ist. Der andere Anlenkpunkt 39 des Hebels 37 liegt in Fahrtrichtung D gesehen vor der Drehachse 28. Am schräg von unten nach oben ansteigenden Hebel 37 ist in einem mittleren Bereich seiner Längserstreckung der vordere Querspriegel 20 schwenkbar gelagert. Der Hauptspriegel 29 weist angrenzend an die Drehachse 28 einen etwa horizontal ausgerichteten Abschnitt 40 auf, von dem aus ein rohrförmiger, den Fahrgastraum 41 überspannender Bügel 42 weggeführt ist. Der Bügel 42 ist fest mit dem Abschnitt 40 verbunden, beispielsweise durch Verschweißen. Ferner sind am Hauptspriegel 29 der hintere Querspriegel 21 und der Eckspriegel 22 drehbar angelenkt. Die Querspriegel 20, 21, der Eckspriegel 22 und der Bügel 42 sind durch längsverlaufende Fangbänder 43 miteinander verbunden (Fig. 5).

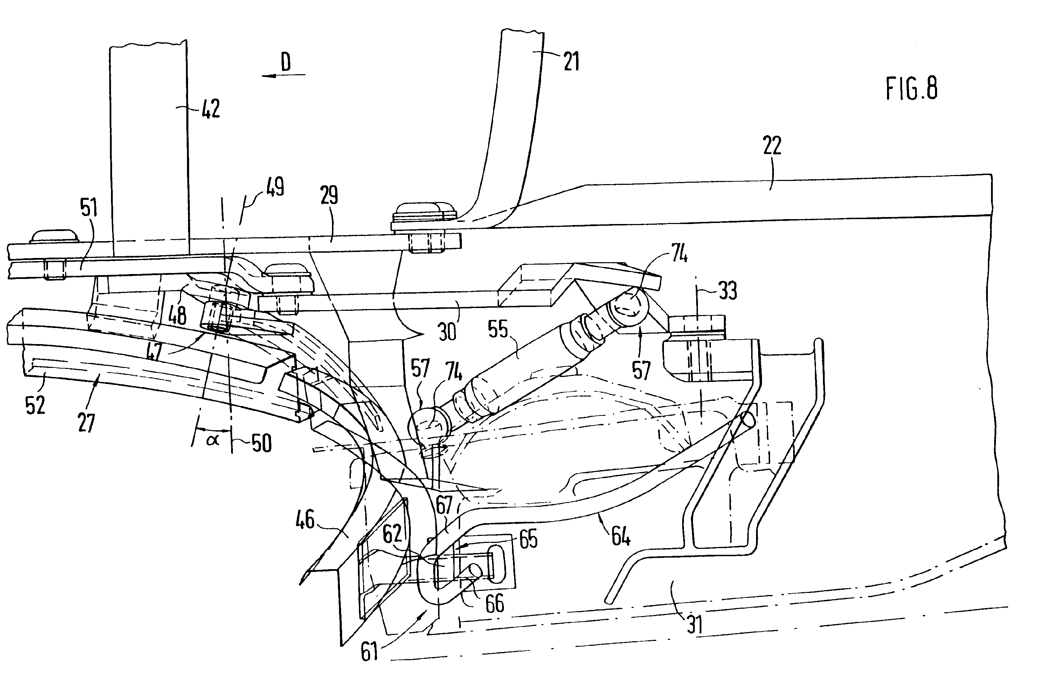

Damit ein hinterer, etwa aufrecht verlaufender Rand 44 der Sichtscheibe 12 bei geschlossenem Klappverdeck 4 gut abgedichtet ist, und sich das Klappverdeck 4 bei einem aus aerodynamischen Gründen mit einem Heckeinzug versehenen Personenwagen ohne Änderung des Heckbereichs 6 in einem karosserieseitigen Aufnahmeraum 45 unterbringen läßt, ist benachbart des Randes 44 ein Säulenabschnitt 46 vorgesehen, der in der Seitenansicht gesehen, etwa parallel zur Kontur der Sichtscheibe 12 verläuft. Der Säulenabschnitt 46 ist an seinem oberen Ende 47 drehbar mit einem am hinteren Längsholm 27 angebrachten Haltewinkel 48 verbunden. Die Drehachse 49 des Säulenabschnittes 46 erstreckt sich unterhalb der Drehachse 35 und in Fahrtrichtung D gesehen vor letzterer. Außerdem verläuft die Drehachse 49 in der Draufsicht gesehen unter einem spitzen Winkel α zu einer vertikalen Hilfsebene 50, dergestalt, daß ein außenliegender Bereich der Drehachse 49 in Fahrtrichtung D gesehen, weiter vorne liegt als ein innenliegender Bereich der Drehachse 49 (Fig. 8). In Höhenrichtung gesehen, kann die gemeinsame Berührungsfläche von Säulenabschnitt 46 und Haltewinkel 48 entweder vertikal ausgerichtet oder leicht geneigt sein. Das obere Ende 47 des Säulenabschnittes 46 wird vom Halteteil 52 des Längsholmes 27 abschnittsweise überlappt (in der Seitenansicht gesehen).

Durch die schrägverlaufende Drehachse 49 führt das untenliegende freie Ende 54 des Säulenabschnittes 46 beim Zurückschwenken des Klappverdecks 4 eine Bewegung nach innen aus, so daß der Säulenabschnitt 46 ohne Änderung des Heckbereiches 6 nach innen in den Aufnahmeraum 45 bewegt wird. Die zurückgeschwenkte Lage des Klappverdecks 4 ist in Fig. 4 strichpunktiert dargestellt. Ferner ist der Säulenabschnitt 46 in einem mittleren Bereich seiner Höhenerstreckung über ein Verbindungsglied 55 an den Lenkhebel 30 angeschlossen. Das Verbindungsglied 55 ist als Stange 56 ausgebildet, deren beide Enden über Kugelgelenke 57 einerseits mit dem Lenkhebel 30 und andererseits an den Säulenabschnitt 46 verbunden sind. Der säulenseitige Anlenkpunkt 58 liegt etwa unterhalb vom Anlenkpunkt 59 des Eckspriegels 22. Die Stange 56 verläuft bei geschlossenem Klappverdeck 4 - entgegen der Fahrtrichtung D gesehen - schräg von unten nach oben. Das lenkhebelseitige Ende 60 der Stange 56 ist oberhalb des Anlenkpunktes 59 des Eckspriegels 22 vorgesehen.

Das untenliegende freie Ende 54 des Säulenabschnittes 46 wirkt bei geschlossenem Klappverdeck 4 mit einer Arretierung 61 zusammen, dergestalt, daß der Säulenabschnitt 46 in Fahrzeugquerrichtung fixiert ist. Die Arretierung 61 wird durch einen längsgerichteten Zapfen 62 gebildet, der bei geschlossenem Klappverdeck 4 etwa horizontal ausgerichtet ist. Der Zapfen 62 ist an ein winkelförmiges Beschlagteil 63 angeformt, das am Säulenabschnitt 46 mittels Schrauben befestigt ist. Der Zapfen 62 erstreckt sich - in Fahrtrichtung D gesehen - vom Säulenabschnitt 46 weg nach hinten. Gemäß den Fig. 7 und 8 wirkt der Zapfen mit einem aufbauseitig angeordneten, bügelförmigen Führungsglied 64 zusammen. Das Führungsglied 64 weist - in der Draufsicht gesehen - einen U-förmigen Endbereich 65 auf, wobei die beiden rohrförmigen Schenkel 66, 67 entgegen der Fahrtrichtung D schräg von unten nach oben verlaufen. Der der Fahrzeuglängsmittelebene E-E zugekehrte Schenkel 67 weist eine größere Länge und abschnittsweise einen gebogenen Formverlauf auf. Der Zapfen 62 wirkt beim Schließen des Klappverdecks 4 mit dem längeren Schenkel 67 dergestalt zusammen, daß das untere Ende 54 des Säulenabschnitts 46 nach außen bewegt wird. Das Führungsglied 64 ist an seinen beiden Enden fest mit der Lagerplatte 31 verschraubt und verläuft - mit Ausnahme der Befestigungsstellen - im wesentlichen oberhalb der Lagerplatte 31. Gemäß Fig. 8 erstreckt sich das Führungsglied 64 mit seinem längeren Schenkel 67 etwa über die Länge der Lagerplatte 31. Bei geschlossenem Klappverdeck 4 ist der Zapfen 62 zwischen den beiden gleichgerichteten Schenkeln 66, 67 des U-förmigen Endbereiches 65 des Führungsgliedes 64 angeordnet. Aus Geräuschgründen ist der Zapfen 62 mit einer nicht näher dargestellten Ummantelung aus Kunststoff oder Gummi versehen.

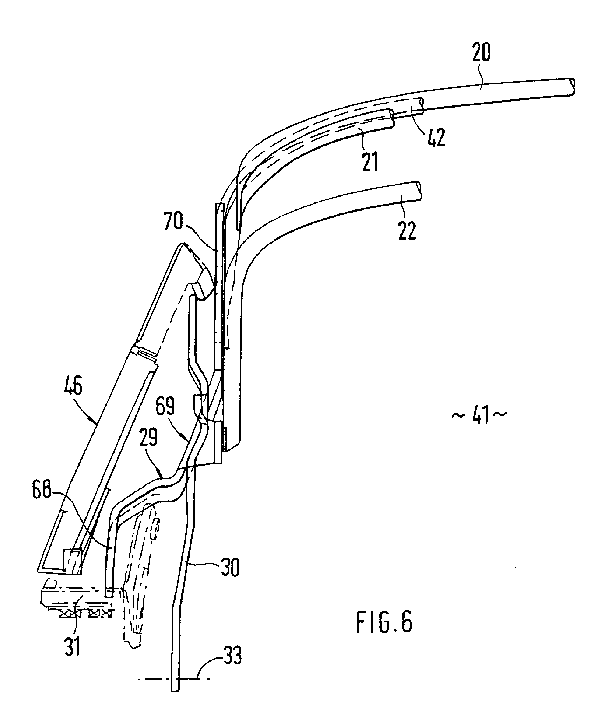

Der Hauptspriegel 29 verläuft - in der Seitenansicht gesehen - mit Abstand zur Kontur des Säulenabschnittes 46 (Fig. 6). Der untere, etwa aufrechte Abschnitt 68 des Hauptspriegels 29 ist über eine schrägverlaufende Abstellung 69 mit dem oberen, weiter innen angeordneten aufrechten Abschnitt 70 verbunden.

Die Kugelgelenke 57 für die Stange 56 werden durch Kugelpfannen 71 gebildet, welche einstellbar auf die Enden 72, 73 der Stange 56 aufgeschraubt werden. Die Kugelpfannen 71 werden auf Kugelköpfe 74 aufgedrückt, die am Lenkhebel 30 und am Säulenabschnitt 46 angebracht sind. Der Säulenabschnitt 46 ist vorzugsweise als Alu-Druckgußteil ausgebildet und im Querschnitt gesehen, etwa L-förmig profiliert.

Der Verdeckbezug 15 ist seitlich am vorderen Verdeckrahmen 17 und an einem unteren Bereich des Säulenabschnittes 46 festgelegt, wogegen er am hinteren Verdeckrahmen 18 befestigungslos anliegt.

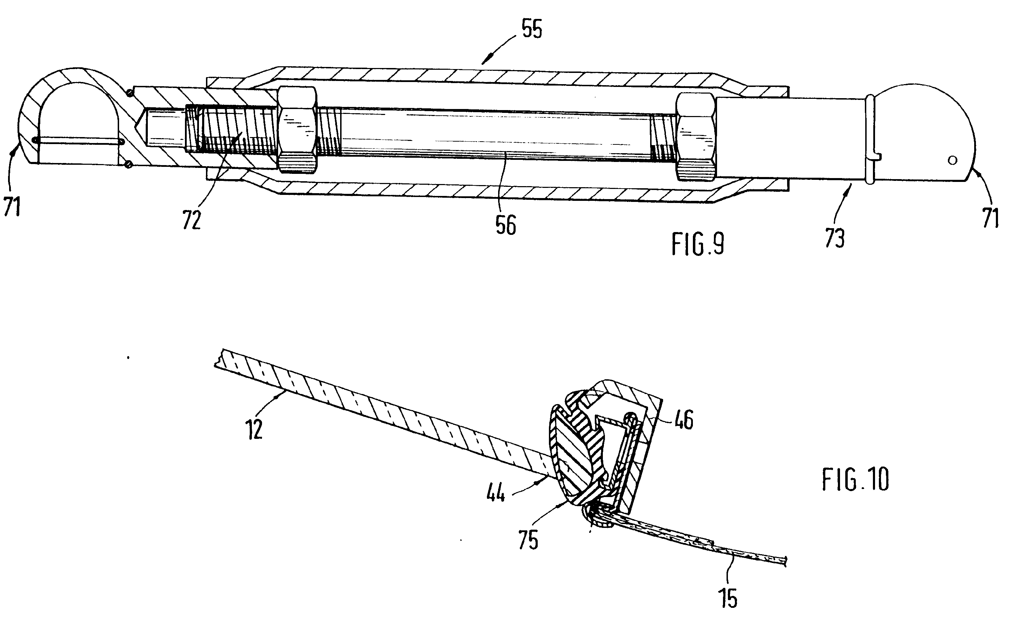

In Fig. 10 ist gezeigt, wie ein mit dem hinteren Rand 44 der Sichtscheibe 12 zusammenwirkender Dichtkörper 75 am Säulenabschnitt 46 befestigt ist. In der zurückgeklappten Stellung B des Klappverdecks ist der Säulenabschnitt 46 mit 46′ bezeichnet (Fig. 4 und 5).

## Patentansprüche

1. Klappverdeck für Fahrzeuge, insbesondere Personenwagen mit einem vorderen und einem hinteren Verdeckrahmen und einem am hinteren Verdeckrahmen angreifenden Parallelogramm-Gestänge, das einen Hauptspriegel und einen Lenkhebel umfaßt, die beide am Aufbau drehbar angelenkt sind, wobei angrenzend an den hinteren Verdeckrahmen eine rahmenlose Sichtscheibe verläuft, dadurch gekennzeichnet, daß ein hinterer, etwa aufrecht verlaufender Rand (44) der Sichtscheibe (12) dichtend mit einem Säulenabschnitt (46) in Wirkverbindung steht, der mit dem hinteren Verdeckrahmen (18) über eine schrägverlaufende Drehachse (49) verbunden ist, und daß der Säulenabschnitt (46) gelenkig über ein Verbindungsglied (55) mit dem Lenkhebel (30) zusammenwirkt, dergestalt, daß beim Zurückschwenken des Klappverdecks (4) ein freies Ende (54) des Säulenabschnitts (46) eine zwangsgesteuerte Bewegung nach innen ausführt.

2. Klappverdeck nach Anspruch 1, dadurch gekennzeichnet, daß ein oberes Ende (47) des Säulenabschnittes (46) gelenkig mit dem hinteren Verdeckrahmen (18) verbunden ist.

3. Klappverdeck nach Anspruch 2, dadurch gekennzeichnet, daß ein Längsholm (27) des hinteren Verdeckrahmens (18) aus einem innenliegenden Längslenker (51) und einem außenliegenden Halteteil (52) besteht.

4. Klappverdeck nach Anspruch 1, dadurch gekennzeichnet, daß der hintere Bereich des Verdeckrahmens (18) das obere Ende (47) des Säulenabschnitts (46) abschnittsweise überlappt.

5. Klappverdeck nach Anspruch 1, dadurch gekennzeichnet, daß ein untenliegendes, freies Ende (54) des Säulenabschnitts (46) bei geschlossenem Klappverdeck (4) mit einer in Fahrzeugquerrichtung wirkenden Arretierung (61) zusammenwirkt.

6. Klappverdeck nach Anspruch 1, dadurch gekennzeichnet, daß eine Drehachse (49) zwischen dem Säulenabschnitt (46) und dem Längslenker (51) des hinteren Verdeckrahmens (18) - in der Draufsicht gesehen - unter einem Winkel (α) zu einer vertikalen Hilfsebene (50) verläuft, dergestalt, daß ein außenliegender Bereich der Drehachse (49) in Fahrtrichtung (D) gesehen, weiter vorne liegt als ein innenliegender Bereich der Drehachse (49).

7. Klappverdeck nach Anspruch 1, dadurch gekennzeichnet, daß das Verbindungsglied (55) durch eine Stange (56) gebildet wird, deren beide Enden (72, 73) über Kugelgelenke (57) an den Lenkhebel (30) und den Säulenabschnitt (46) angeschlossen sind.

8. Klappverdeck nach Anspruch 1, dadurch gekennzeichnet, daß die Stange (56) bei geschlossenem Klappverdeck (4) entgegen der Fahrtrichtung gesehen, schräg von unten nach oben verläuft und daß das säulenseitige Ende der Stange (56) in einem mittleren Bereich der Höhenerstreckung des Säulenabschnitts (46) angeordnet ist.

9. Klappverdeck nach Anspruch 1, dadurch gekennzeichnet, daß die Arretierung (61) durch einen längsgerichteten, am Säulenabschnitt (A) befestigten Zapfen (62) gebildet wird, der mit einem aufbauseitig angeordneten, bügelförmigen Führungsglied (64) in Wirkverbindung steht.

10. Klappverdeck nach Anspruch 9, dadurch gekennzeichnet, daß das Führungsglied (64) im wesentlichen oberhalb einer aufbauseitigen Lagerplatte (31) angeordnet ist.

11. Klappverdeck nach Anspruch 9, dadurch gekennzeichnet, daß das Führungsglied (64) im wesentlichen auf der der Längsmittelebene (E-E) zugekehrten Seite des Zapfens (62) angeordnet ist und einen gebogenen Formverlauf aufweist.

12. Klappverdeck nach Anspruch 9, dadurch gekennzeichnet, daß sich bei geschlossenem Klappverdeck (4) der Zapfen (62) zwischen zwei gleichgerichteten Schenkeln (66, 67) eines U-förmigen Endbereiches (65) des Führungsgliedes (64) erstreckt.

## Claims

1. A collapsible hood for vehicles, in particular passenger cars with a front and a rear hood frame and a parallelogram rod-system engaging on the rear hood frame and comprising a main hoop and a guiding lever which are both rotatably connected to the body, a frameless window extending adjacent to the rear hood frame, characterized in that a rear edge (44) of the window (12) extending substantially upright is operatively connected in a sealing manner to a column portion (46) connected to the rear hood frame (18) by way of an obliquely extending pivot shaft (49), and the column portion (46) cooperates in an articulated manner with the guiding lever (30) by way of a connexion member (55), in such a way that when the collapsible hood (4) is swung back a free end (54) of the column portion (46) performs a forcibly controlled movement inwards.

2. A collapsible hood according to Claim 1, characterized in that an upper end (47) of the column portion (46) is connected to the rear hood frame (18) in an articulated manner.

3. A collapsible hood according to Claim 2, characterized in that a longitudinal crosshead (27) of the rear hood frame (18) comprises a longitudinal support arm (51) lying on the inside and a retaining part (52) lying on the outside.

4. A collapsible hood according to Claim 1, characterized in that the rear area of the hood frame (18) overlaps the upper end (47) of the column port ion (46 ).

5. A collapsible hood according to Claim 1, characterized in that when the collapsible hood (4) is closed an underlying free end (54) of the column portion (46) cooperates with a locking means (61) operating in the transverse direction of the vehicle.

6. A collapsible hood according to Claim 1, characterized in that a pivot shaft (49) between the column portion (46) and the longitudinal support arm (51) of the rear hood frame (18) extends at an angle (α) to a vertical auxiliary plane (50) as viewed from above, in such a way that an area of the pivot shaft (49) lying on the outside as viewed in the direction of travel (D) lies further forward than an area of the pivot shaft (49) lying on the inside.

7. A collapsible hood according to Claim 1, characterized in that the connexion member (55) is formed by a rod (56), the two ends (72, 73) of which are connected by way of ball-and-socket joints (57) to the guide lever (30) and the column portion (46).

8. A collapsible hood according to Claim 1, characterized in that when the collapsible hood (4) is closed the rod (56) extends obliquely upwards from below as viewed in the direction opposite to the direction of travel, and the end of the rod (56) towards the column is arranged in a central region of the vertical extension of the column portion (46).

9. A collapsible hood according to Claim 1, characterized in that the locking means (61) is formed by a longitudinally directed pin (62) secured to the column portion (A) and operatively connected to a yoke-shaped guide member (64) arranged on the body.

10. A collapsible hood according to Claim 9, characterized in that the guide member (64) is arranged substantially above a bearing plate (31) on the body.

11. A collapsible hood according to Claim 9, characterized in that the guide member (64) is arranged substantially on the side of the pin (62) facing the longitudinal median plane (E-E) and has a crooked shape.

12. A collapsible hood according to Claim 9, characterized in that when the collapsible hood (4) is closed the pin (62) extends between two arms (66, 67) -- orientated in the same direction -- of a U-shaped end area (65) of the guide member (64).

## Revendications

1. Capote rabattable pour véhicule automobile, en particulier pour voiture de tourisme, comportant un cadre avant et un cadre arrière ainsi qu'une tringlerie en parallélogramme agissant sur le cadre arrière, qui comprend un arceau principal et un levier de commande, s'articulant tous deux sur la carrosserie de manière à pouvoir tourner, une vitre sans cadre étant adjacente au cadre arrière de la capote, caractérisée en ce qu'un bord arrière (44), s'étendant à peu près verticalement, de la vitre (12), coopère activement, de manière étanche, avec une partie de montant (46) qui est assemblée avec le cadre arrière (18), par un axe de rotation (49) oblique et en ce que la partie de montant (46) coopère de telle sorte que lors du rabattement de la capote (4), une extrémité libre (54) de la partie de montant (46) exécute un déplacement forcé vers l'intérieur.

2. Capote rabattable selon la revendication 1, caractérisée en ce qu'une extrémité supérieure (47) de la partie de montant (46) est assemblée de manière articulée avec la partie de cadre arrière (18).

3. Capote rabattable selon la revendication 2, caractérisée en ce qu'un longeron (27) du cadre arrière (18) est constitué d'un bras oscillant longitudinal (51), situé à l'intérieur, et d'un élément de maintien (52) situé à l'extérieur.

4. Capote rabattable selon la revendication 1, caractérisée en ce que la zone arrière du cadre (18) de la capote recouvre en partie l'extrémité supérieure (47) de la partie de montant (46).

5. Capote rabattable selon la revendication 1, caractérisée en ce qu'une extrémité libre (54), située en bas, de la partie de montant (46), coopère avec un dispositif de blocage (61), agissant dans la direction transversale du véhicule, lorsque la capote (4) est fermée.

6. Capote rabattable selon la revendication 1, caractérisée en ce qu'un axe de rotation (49) situé entre la partie de montant (46) et le bras oscillant longitudinal (51) du cadre arrière (18) - vu de dessus - forme un angle α par rapport à un plan auxiliaire (50) vertical, de manière qu'une zone située à l'extérieur de l'axe de rotation (49), vu dans le sens de la marche (D), se situe plus loin vers l'avant qu'une zone intérieure de l'axe de rotation (49).

7. Capote rabattable selon la revendication 1, caractérisée en ce que l'organe de liaison (55) est formé par une tringle (56) dont les deux extrémités (72, 73) sont rattachées, par des joints sphériques (57), au levier de commande (30) et à la partie de montant (46).

8. Capote rabattable selon la revendication 1, caractérisée en ce que la tringle (56), vue dans le sens contraire au sens de la marche, s'étend obliquement de bas en haut, lorsque la capote (4) est fermée et en ce que l'extrémité côté montant de la tringle (56) est située dans une zone centrale de l'extension en hauteur de la partie de montant (46).

9. Capote rabattable selon la revendication 1, caractérisée en ce que le dispositif de blocage (61) est formé par un tenon (62) orienté dans la longueur, fixé sur la partie de montant (A), lequel tenon coopère activement avec un organe de guidage (64) en forme d'étrier, monté côté carrosserie.

10. Capote rabattable selon la revendication 9, caractérisée en ce que l'organe de guidage (64) est situé à peu près au-dessus d'une plaque d'appui (31) côté carrosserie.

11. Capote rabattable selon la revendication 9, caractérisée en ce que l'organe de guidage (64) est monté à peu près sur le côté du tenon (62), tourné vers le plan médian longitudinal (E-E) et présente une forme cintrée.

12. Capote rabattable selon la revendication 9, caractérisée en ce que dans le cas où la capote (4) est fermée, le tenon (62) s'étend entre deux branches (66, 67), dirigées dans le même sens, d'une zone terminale (65) en U de l'organe de guidage (64).
